(19) Europäisches Patentamt
European Patent Office
Office européen des brevets

(11) Veröffentlichungsnummer: **0 284 009 B1**

(12) # EUROPÄISCHE PATENTSCHRIFT

(45) Veröffentlichungstag der Patentschrift: **02.01.92**

(51) Int. Cl.[5]: **C09B 62/51**

(21) Anmeldenummer: **88104521.5**

(22) Anmeldetag: **22.03.88**

(54) **Verfahren zur Herstellung des Lithiumsalzes eines faserreaktiven Azofarbstoffes.**

(30) Priorität: **27.03.87 DE 3710176**

(43) Veröffentlichungstag der Anmeldung:
**28.09.88 Patentblatt 88/39**

(45) Bekanntmachung des Hinweises auf die Patenterteilung:
**02.01.92 Patentblatt 92/01**

(84) Benannte Vertragsstaaten:
**BE CH DE ES FR GB IT LI**

(56) Entgegenhaltungen:
**EP-A- 0 183 142**
**FR-A- 2 168 535**
**FR-A- 2 339 653**

(73) Patentinhaber: **HOECHST AKTIENGESELLSCHAFT**
**Postfach 80 03 20**
**W-6230 Frankturt am Main 80(DE)**

(72) Erfinder: **Opitz, Konrad, Dr.**
**Schwedenstrasse 22**
**W-6237 Liederbach(DE)**
Erfinder: **Segal, Marcos, Dr.**
**Av. Jorge Bei Maluf 2073/2173**
**BR-08600 Suzano SP(BR)**

**EP 0 284 009 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

Der faserreaktive Azofarbstoff der, in Form der freien Säure geschriebenen, Formel (A)

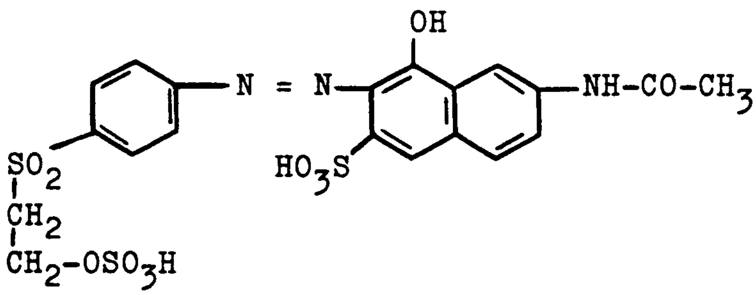

(A)

ist als Natriumsalz aus dem Colour Index als C.I. Reactive Orange 16 bekannt und besitzt eine so geringe Wasserlöslichkeit, daß seine Anwendung nach verschiedenen Färbeverfahren, insbesondere seine Anwendung in Klotzflotten, mit erheblichen Schwierigkeiten verbunden ist, um egale und fleckenfreie tiefe Färbungen zu erzielen. Der Grund liegt darin, daß es sehr leicht zu Farbstoffabscheidungen aus den Färbeflotten kommt, zumal der beim Färben mit Reaktivfarbstoffen übliche und erforderliche Zusatz von Elektrolytsalzen und Alkali die Wasserlöslichkeit des Farbstoffes noch zusätzlich vermindert. Auch reicht die Wasserlöslichkeit des Natriumsalzes dieses Farbstoffes nicht aus, um flüssige wäßrige Färbepräparationen mit einem für die Praxis interessanten Farbstoffgehalt von mindestens 10 Gew.-% herzustellen.

Diesen Mangel zu beheben gelang bereits durch Überführung dieses Farbstoffes in dessen Lithiumsalz (s. Beispiele 2 und 9 der EP-A- 0 183 142). Mit dem dort beschriebenen Verfahren wird zwar ein reines Lithiumsalz der Azoverbindung der Formel (A) erhalten, das sogar praktisch frei von Elektrolytsalzen ist, das Verfahren zur Herstellung dieses Lithium-Reaktivfarbstoffes hat jedoch, obwohl es selbst gegenüber dem Stand der Technik erhebliche Vorteile bietet, noch Mängel, die einen anderen Weg zur Synthese dieses Lithium-Reaktivfarbstoffes zu suchen wünschenswert erschienen ließen. Das bekannte Verfahren liefert nämlich beträchtliche Fabrikationsrückstände in Form von Calciumsulfat (Gips) und der Mutterlauge des Calciumsalzes des Farbstoffes (A). Der anfallende Gips, sofern er anderweitig nicht verwertet werden kann, kann einer Deponie zugeführt werden; hingegen erfordert die salz- und farbstoffhaltige Mutterlauge eine zusätzliche Aufarbeitungsbehandlung, bevor sie als Abwasser abgeleitet werden kann.

Aufgrund der bekannten guten und besseren Löslichkeit der Lithiumsalze von anionischen Farbstoffen in Wasser im Vergleich zu den Natrium- und Kaliumsalzen war schon vor Auffindung des bekannten Verfahrens der EP-A- 0 183 142 nach günstigen Herstellungsweisen von Lithiumsalzen von Farbstoffen gesucht worden. Diese haben jedoch alle technische Nachteile und/oder können nicht als ein vorteilhafter Weg zur Herstellung eines praktisch natriumfreien Lithiumsalzes der Azoverbindung (A) verwertet werden.

So wird beispielsweise gemäß der US-PS 3 655 640 die aus der Synthese erhaltene wäßrige Lösung des Natriumsalzes des dort beschriebenen Azofarbstoffes zunächst durch Neutralisation mittels Schwefelsäure auf einen pH-Wert von 6,8 in ein Farbstoffprodukt übergeführt, das in der Säureform dieses Farbstoffes vorliegen soll, welches sodann isoliert und mit Wasser schwefelsäure- und natriumfrei gewaschen, getrocknet und mittels Vermahlen mit Lithiumhydroxid in das Lithiumsalz dieses Farbstoffes umgesetzt wird. Dieses Verfahren hat jedoch Nachteile für anionische faserreaktive Farbstoffe mit wasserlöslich machenden Gruppen, wie Sulfogruppen und der Sulfatogruppe im faserreaktiven Rest. Versucht man deren Natrium- oder Kaliumsalze durch Säure in die saure Form des Reaktivfarbstoffes zu überführen, so gelingt dies nicht quantitativ; der Farbstoff fällt - wenn überhaupt - in Form seines sauren Natrium- oder Kaliumsalzes oder als Mischung der freien Säure mit dem Natrium- oder Kaliumsalz aus, und aus diesem komplexen Farbstoffgemisch können die restlichen Alkaliionen nur mühsam mit wäßriger Säure ausgewaschen werden; hierbei kann nicht ausgeschlossen werden, daß während der langwierigen sauren Behandlung die faserreaktive Gruppe des Farbstoffes geschädigt wird. Darüberhinaus ergeben sich wegen der sauren Abwässer zusätzliche Aufbereitungsprobleme.

Eine andere Verfahrensweise zur Herstellung von Lithiumsalzen von Farbstoffen, die allerdings auf solche von 1:2-Metallkomplex-Azofarbstoffe beschränkt ist, wird in der EP-B- 0 077 965 beschrieben. Nach ihr erfolgt die Herstellung dieser Lithiumfarbstoffe in der Weise, daß man die Kupplungs- und Metallkomplexbildungs-Reaktion in einem organischen, mit Wasser mischbaren Lösemittel durchführt und

hierbei während der Kupplungsreaktion die pH-Einstellung mittels einer alkalischen Lithiumverbindung vornimmt; der gebildete Metallkomplex-Azofarbstoff bleibt vorwiegend als Lithiumsalz in Lösung, während anorganische Natriumsalze, wie Natriumchlorid, weitgehend ausfallen. Neben der Spezifität dieses Verfahrens auf Metallkomplex-Azofarbstoffe, die die Übertragung dieses Verfahrens auf C.I. Reactive Orange 16 a priori nicht erlaubt, hat es den Nachteil, daß wassermischbare organische Lösemittel eingesetzt werden müssen, die nur aufwendig wieder aufgearbeitet werden können.

Desweiteren beschreiben die US-Patentschriften Nrs. 3 600 376, 3 701 624 und 3 635 944 die Herstellung von Lithiumsalzen von anionischen Azofarbstoffen ohne faserreaktive Gruppe; diese Farbstoffe werden jedoch nicht als reine Lithiumsalze, sondern als Lithium-Natrium-Salze erhalten, weil bei der Synthese Reagenzien verwendet werden müssen, die als Natriumverbindungen vorliegen. So ist beispielsweise ein für die Diazotierung erforderliches Lithiumnitrit technisch nicht zugänglich, und Zwischenisolierungen durch Ausfällung mit Lithiumchlorid sind nicht möglich.

Gemische aus Lithium- und Natriumsalzen von anionischen Azofarbstoffen werden ebenfalls mit dem Verfahren der GB-B-1 318 111 erhalten, da die dort geübte Überführung der Natriumsalze von faserreaktiven Farbstoffen in deren Lithiumsalze zum Zwecke der Löslichkeitsverbesserung des Farbstoffes lediglich durch Zusatz eines wasserlöslichen Lithiumsalzes geschieht.

Die eben besprochenen Verfahren, ausgenommen das Verfahren aus EP-A-183 142, führen nicht zu hochreinen Lithiumsalzen von faserreaktiven Farbstoffen und somit auch nicht zur Herstellung eines reinen Lithiumsalzes der Azoverbindung der Formel (A). Selbst relativ geringe Mengen an Natriumionen in solch einem Farbstoff verhindern eine gute Lagerstabilität der flüssigen, wäßrigen, konzentrierten Farbstoffpräparationen bei niedrigen Temperaturen. Bereits 1 Natriumion pro Farbstoffmolekül in einem Syntheseprodukt des Li-Farbstoffsalzes des Farbstoffes der Formel (A), das beispielsweise dadurch erhalten werden kann, daß man das Lithiumsalz des 4-(β-Sulfatoethyl-sulfonyl)-anilins in üblicher Weise in saurer Lösung mit der äquivalenten Menge an Natriumnitrit diazotiert und mit dem Lithiumsalz der 1-Hydroxy-7-acetylamino-naphthalin-3-sulfonsäure, hergestellt gemäß Beispiel 3 der US-A-4 379 937, kuppelt, führt dazu, daß aus einer flüssigen, wäßrigen, konzentrierten Farbstoffpräparation schon nach wenigen Tagen bei 0 °C das schwerlösliche Natriumsalz (C.I. Reactive Orange 16) aus diesem Lithium-Natrium-Farbstoffsalzgemisch ausfällt.

Mit der vorliegenden Erfindung wurde nun ein Verfahren zur Herstellung des Azofarbstoffes als Lithiumsalz der Formel (1)

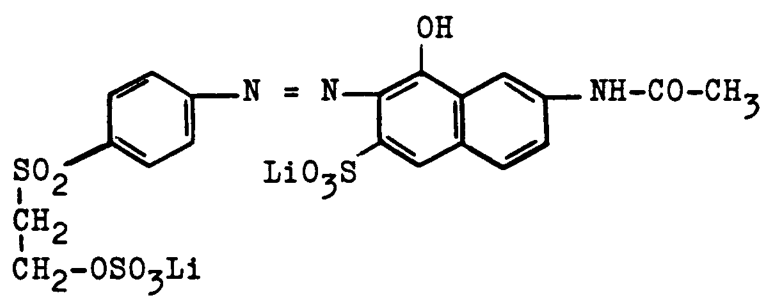

(1)

gefunden, das diesen Lithium-Farbstoff als reines Lithium-Farbstoffsalz mit einem Na-Gehalt von unter 0,2 Gew.-%, bevorzugt unter 0,1 Gew.-%, liefert. Das erfindungsgemäße Verfahren ist dadurch gekennzeichnet, daß man das Lithiumsalz des 4-(β-Sulfatoethylsulfonyl)-anilins in bevorzugt wäßriger Lösung mit Nitrosylschwefelsäure diazotiert und mit dem Lithiumsalz der 1-Hydroxy-7-acetylamino-naphthalin-3-sulfonsäure in bevorzugt wäßriger Lösung bei einem pH-Wert zwischen 3 und 7 unter Verwendung einer anorganischen basischen lithiumverbindung kuppelt.

Das Diazotierungs- und Kupplungsmedium ist bevorzugt eine rein-wäßrige Lösung. Es können aber auch organische, mit Wasser mischbare Lösemittel, wie beispielsweise niedere Alkanole, wie Methanol und Ethanol, Dimethylformamid, Dimethylsulfoxid und N-Methyl-pyrrolidon, mitverwendet werden. Das Lithiumsalz der Diazokomponente läßt sich durch Neutralisation der üblicherweise mittels des Backverfahrens erhältlichen Schwefelsäurehalbesters des 4-(β-Hydroxyethylsulfonyl)-anilins gewinnen. Das Lithiumsalz der Kupplungskomponente erhält man beispielsweise nach dem aus der US-Patentschrift 4 379 937 bekannten Verfahren.

Die Diazotierungsreaktion erfolgt in der Regel bei einer Temperatur zwischen -5 °C und +20 °C in stark mineralsaurer, wie schwefelsaurer oder salzsaurer Lösung, bevorzugt jedoch ohne Zusatz einer Säure und allein unter Verwendung der Nitrosylschwefelsäure (diese in der Regel in Schwefelsäure als Lösemittel

vorliegend), bei einem pH-Wert von 2 oder unterhalb 2. Die Kupplungsreaktion wird bei einer Temperatur zwischen 0 und 30 °C, bevorzugt zwischen 5 und 25 °C, und bevorzugt bei einem pH-Wert zwischen 3,5 und 6,5 und insbesondere zwischen 4 und 6, ausgeführt.

Man führt das erfindungsgemäße Verfahren beispielsweise in der Art durch, daß man unter Kühlung und Rühren bei einer Temperatur zwischen 0 °C und +10 °C Nitrosylschwefelsäure unter die Oberfläche einer wäßrigen Lösung des Lithiumsalzes des 4-(β-Sulfatoethylsulfonyl)-anilins einlaufen läßt (einleitet), so daß keine nitrosen Gase entweichen. Die erhaltene Diazoniumsalzsuspension wird mit der wäßrigen Lösung des Lithiumsalzes der 1-Hydroxy-7-acetylaminonaphthalin-3-sulfonsäure versetzt und mit dem Hydroxid oder einem Carbonatsalz des Lithiums, bevorzugt mit Lithiumcarbonat, auf einen pH-Wert zwischen 3,5 und 6,5, bevorzugt zwischen 4 und 6, eingestellt. Die Kupplungsreaktion läuft rasch innerhalb kurzer Zeit ab.

Die erfindungsgemäße Diazotierung des Lithiumsalzes des 4-(β-Sulfatoethylsulfonyl)-anilins mit der anschließenden Kupplungsreaktion mit dem Lithiumsalz der genannten Kupplungskomponente kann mit gleichem Vorteil an Stelle von Nitrosylschwefelsäure als Diazotierungsreagenz auch mit Lithiumnitrit, mit nitrosen Gasen (Stickoxiden) oder mit einem Ester der salpetrigen Säure, wie Amylnitrit, jeweils unter Zusatz einer Mineralsäure, wie Schwefelsäure oder Salzsäure, durchgeführt werden. Jedoch ist die Verwendung dieser Diazotierungsreagenzien technisch nur von geringer Bedeutung.

Eine Variante des erfindungsgemäßen Verfahrens, die sich vor allem anbietet, wenn man eine möglichst konzentrierte wäßrige Lösung der Azoverbindung der Formel (1) anstrebt, ist dadurch gekennzeichnet, daß man die wäßrige Diazoniumsalzsuspension des Lithiumsalzes des 4-(β-Sulfatoethylsulfonyl)-anilins vorlegt und das Lithiumsalz der genannten Kupplungskomponente in konzentrierter Form, beispielsweise als trockenes Pulver oder als feuchten Preßkuchen, zusetzt und mittels einer anorganischen basischen Lithiumverbindung, wie bevorzugt Lithiumcarbonat, einen pH-Wert zwischen 3,5 und 6,5, bevorzugt 4 und 6, einstellt und hält.

Eine andere vorteilhafte Variante des erfindungsgemäßen Verfahrens besteht darin, daß man gleichzeitig mit der allmählichen Zugabe der Diazoniumsalzsuspension zur vorgelegten Lösung des Lithiumsalzes der genannten Kupplungskomponente eine anorganische basische Verbindung des Lithiums, wie beispielsweise Lithiumcarbonat, so zugibt, daß der pH-Bereich von 3,5 bis 6,5, bevorzugt 4 bis 6, bereits zu Anfang der Zugabe des Diazoniumsalzes eingestellt und während der Dauer der Zugabe des Diazoniumsalzes aufrechterhalten wird.

Die jeweils resultierende Lösung der Verbindung der Formel (1) kann unmittelbar nach der Synthese oder nach einer sogenannten Naßstandardisierung, d.h. nach Zusatz geeigneter Stellmittel, wie beispielsweise Lithiumsulfat, Lithiumchlorid, Harnstoff oder ε-Caprolactam, getrocknet, beispielsweise sprühgetrocknet, werden oder sie kann unmittelbar nach der Synthese zu einer lagerstabilen flüssigen Farbstoffpräparation eingestellt werden, beispielsweise mittels Puffersubstanzen, die einen pH-Wert zwischen 3 und 6,5 bevorzugt zwischen 4 und 6, einzustellen und zu halten vermögen, wie beispielsweise Essigsäure/Lithiumacetat, Dilithiumhydrogen- und Lithiumdihydrogenphosphat, gegebenenfalls mit Phosphorsäure, Weinsäure oder Citronensäure, und/oder anderen für Flüssigpräparationen von Reaktivfarbstoffen vorteilhaften üblichen Hilfsmitteln, beispielsweise Konservierungsmittel.

Wie für die Verbindung (1) bekannt, dient auch das erfindungsgemäß erhältliche Produkt, sei es als Festsubstanz oder in Form einer Flüssigpräparation, zum vorteilhaften Färben und Bedrucken von carbonamid- und/oder hydroxygruppenhaltigem Material, bevorzugt Fasermaterial, wie beispielsweise Wolle, Seide, synthetischen Polyamidfasern und natürlicher und regenerierter Cellulose.

Bei dem erfindungsgemäßen Verfahren fallen weder Fabrikationsrückstände, wie Calciumsulfat oder Mutterlaugen, die vor Einleitung in das Abwasser aufgearbeitet werden müßten, an noch sind Zwischenisolierungen und -synthesen von anderen Produkten, wie des Farbstoff-Calciumsalzes, erforderlich. Das erfindungsgemäße Verfahren läßt sich deshalb in äußerst leichter und technisch einfacher Weise durchführen, was zu erheblichen Einsparungen an Arbeitszeit, an Verfahrensschritten und Apparaturen und somit zu einer erheblichen Einsparung an Kosten führt. Nach dem erfindungsgemäßen Verfahren wird das Lithiumsalz der Formel (1) in sehr hoher Reinheit und insbesondere mit einem Na-Gehalt von unter 0,2 Gew.-%, insbesondere unter 0,1 Gew.-%, bezogen auf die Verbindung der Formel (1), erhalten. Zwar enthält die erfindungsgemäß hergestellte Lithiumverbindung der Formel (1) im Vergleich zu der nach dem Verfahren der EP-A-183 142 erhältlichen Li-Verbindung (1) zusätzlich Lithiumsulfat. Im Gegensatz zu Natriumsulfat oder anderen Alkalimetall-Elektrolytsalzen, die in der Regel bei der Synthese von faserreaktiven Azofarbstoffen zusammen mit der synthetisierten Azoverbindung anfallen, stört das Lithiumsulfat im erfindungsgemäß erhaltenen Produkt überraschenderweise die Löslichkeit der Verbindung (1) in wäßrigem Medium und dessen Anwendung in der Färberei nicht.

Selbst ein hoher Gehalt an Lithiumsulfat von etwa 25 Gew.-%, bezogen auf die Verbindung (1), erlaubt es, hochkonzentrierte wäßrige Lösungen mit der Verbindung (1) herzustellen, deren Konzentration um das

über Fünffache höher ist als dies bei dem entsprechenden Natriumsalz, d.h. C.I. Reactive Orange 16, möglich ist. Bei der Anwendung der Verbindung (1) ergeben sich auch bei hohem Anteil an Lithiumsulfat keine Farbstoffausflockungen in den Färbebädern, wie beispielsweise in den hochkonzentrierten alkalischen Färbeflotten, die für Einphasen-Färbe- oder -Druckverfahren verwendet werden. Dieser Effekt ist überraschend, zumal die Anwesenheit von Lithiumsulfat in der erfindungsgemäß erhältlichen Lithiumverbindung der Formel (1) technisch nicht unerwünscht ist; denn in der Regel werden Farbstoffpulver technisch nicht als reine, 100%ige Verbindungen angewendet, sondern zusammen mit als Stellmittel dienenden Elektrolytsalzen verdünnt, so daß sie leichter handhabbar sind.

Die nachstehenden Beispiele dienen zur Erläuterung der Erfindung. Die Teile sind Gewichtsteile und die Prozentangaben stellen Gewichtsprozente dar, sofern nicht anders vermerkt. Gewichtsteile verhalten sich zu Volumenteilen wie das Kilogramm zu Liter.

**Beispiel 1**

281 Teile des sauren Schwefelsäurehalbesters des 4-(β-Hydroxyethylsulfonyl)-anilins werden in 800 Teilen Wasser angerührt und mit 40 Teilen Lithiumcarbonat bei einem pH-Wert zwischen 5 und 5,5 gelöst. Der Ansatz wird durch Zusatz von 300 Teilen Eis auf 5°C abgekühlt. Die Diazotierung erfolgt durch Einleiten von 318 Teilen einer 40 %igen Lösung von Nitrosylschwefelsäure in Schwefelsäure unter die Oberfläche des Ansatzes innerhalb von vier Stunden, wobei die Reaktionstemperatur durch Zugabe von weiteren etwa 500 Teilen Eis bei 5°C gehalten wird. Man rührt noch eine Stunde nach und zersetzt den Nitrosylschwefelsäureüberschuß mit Amidosulfonsäure, gibt sodann 287 Teile des Lithiumsalzes der 1-Hydroxy-7-acetylamino-naphthalin-3-sulfonsäure langsam und unter Einhaltung eines pH-Wertes von 5 mittels 207 Teilen Lithiumcarbonat hinzu und rührt anschließend den Kupplungsansatz noch etwa 15 Minuten nach.

Die erhaltene Lösung der Azoverbindung der Formel (1) kann direkt der färberischen Anwendung zugeführt werden oder als handelsfähige flüssige Farbstoffpräparation, vorteilhaft nach Zusatz einer Puffermischung, dienen. Zur Herstellung einer handelsfähigen Flüssigpräparation versetzt man die erhaltenen 2600 Teile der an der Verbindung (1) 22,5 %igen Syntheselösung beispielsweie mit 67 Teilen Essigsäure und 37 Teilen Lithiumcarbonat sowie 480 Teilen Wasser; man erhält 3130 Teile der Flüssigpräparation, die 18,6 %ig an der Verbindung (1) ist und einen pH-Wert von 4,8 aufweist. Diese Flüssigpräparation ist sowohl bei niedrigen Temperaturen, beispielsweise bei 0°C während mehr als zwei Wochen, als auch bei höheren Temperaturen, wie bei 40°C über zwei Monate, lagerstabil, d. h. es treten keine Farbstoffausfällungen auf und Farbstärke sowie Farbton damit hergestellter Färbungen und Drucke bleiben unverändert.

Mit 3 Teilen dieser pH-stabilisierten Lösung können Färbebäder, Klotzflotten und Druckpasten in bekannter und üblicher Weise hergestellt werden, die, in der für faserreaktive Farbstoffe üblichen Weise auf Baumwolle appliziert und fixiert, orange Färbungen und Drucke ergeben, die genauso farbstark sind wie diejenigen, die unter entsprechender Verwendung gleich konzentrierter Färbebäder, Klotzflotten oder Druckpasten mit 1 Teil einer 59,1 % C.I. Reactive Orange 16 (d.h. dem Natriumsalz der Verbindung (A)) enthaltenden Pulvereinstellung hergestellt werden.

**Beispiel 2**

Eine Lösung von 287 Teilen des Lithiumsalzes der 1-Hydroxy-7-acetylamino-naphthalin-3-sulfonsäure in 1000 Teilen Wasser wird auf 5 bis 10°C abgekühlt (hierbei kann ein Teil der Lithiumsalzes auskristallisieren) und mit der Diazoniumsalzsuspension gemäß Beispiel 1, das Diazoniumsalz aus 281 Teilen 4-(β-Sulfatoethylsulfonyl)-anilin enthaltend, gemäß der im Beispiel 1 angegebenen Weise versetzt, wobei auch hier mit Lithiumcarbonat ein pH-Wert von 5 bis 6 eingestellt und gehalten und die Kupplungsreaktion bei 10°C unter Zugabe von Eis durchgeführt wird. Die erhaltene Lösung mit derVerbindung (1) kann eingedampft, beispielsweise sprühgetrocknet werden. Man erhält 900 Teile eines Pulvers, das neben Lithiumsulfat 62,5 % der Verbindung (1) enthält.

Mit diesem Farbstoffpulver lassen sich sowohl schwach sauer oder neutral als auch alkalisch eingestellte Klotzflotten, die beispielsweise 50 Teile der Verbindung (1) in 1000 Teilen der Klotzflotte enthalten, herstellen. Selbst die alkalisch eingestellten Klotzflotten zeigen weder sofort noch während des Färbeprozesses Abscheidungen an Farbstoff, wie dies bei C.I. Reactive Orange 16, dem Natriumsalz der Verbindung (A), der Fall ist.

**Beispiel 3**

Eine Suspension von 287 Teilen des Lithiumsalzes der 1-Hydroxy-7-acetylamino-naphthalin-3-sulfonsäure in 1000 Teilen Wasser wird mittels 3 Teilen Lithiumhydroxidsemihydrat gelöst. Die Lösung wird auf 10° C abgekühlt, wobei ein Teil des Lithiumsalzes wieder auskristallisieren kann. Man gibt eine Diazoniumsalzsuspension gemäß Beispiel 1 mit dem Diazoniumsalz aus 281 Teilen 4-(β-Sulfatoethylsulfonyl)-anilin hinzu und hält von Anfang an einen pH-Wert von 4 bis 6 mittels Lithiumcarbonat und eine Temperatur von 10° C mittels Eis ein. Die Kupplungsreaktion ist praktisch unmittelbar nach vollständiger Zugabe der Diazoniumsalzsuspension und des Lithiumcarbonats beendet.

Die wäßrige Lösung der Verbindung (1) wird durch Zugabe einer Lösung von 30 Teilen Lithiumdihydrogenphosphat und 30 Teilen Dilithiumhydrogenphosphat in 300 Teilen Wasser (erhältlich durch Umsetzung von 30 Teilen Lithiumcarbonat mit 50 Teilen Phosphorsäure in Wasser) und weiteren 400 Teilen Wasser in 4000 Teile einer Flüssigpräparation mit einem Gehalt der Verbindung (1) von 14 % und einem pH-Wert von 4,6 übergeführt. Diese Präparation ist mindestens zwei Wochen bei einer Temperatur von 0° C, mindestens 12 Monate bei einer Temperatur von 20° C und mindestens 3 Monate bei einer Temperatur von 40° C lagerstabil, während eine entsprechende Flüssigpräparation mit gleicher Farbstoffkonzentration, die unter Verwendung von Natriumnitrit als Diazotierungsagens hergestellt wurde, bereits nach 1 bis 3 Tagen bei 20° C deutliche Mengen an dem Farbstoff C.I. Reactive Orange 16 abscheidet.

Mit 4 Teilen der pH-stabilisierten Lösung der Verbindung (1) können Färbebäder, Klotzflotten oder Druckpasten in bekannter und üblicher Weise hergestellt werden, die, in der für faserreaktive Farbstoffe üblichen Weise auf Baumwolle appliziert und fixiert, orange Färbungen und Drucke ergeben, die genauso farbstark sind wie diejenigen, die unter entsprechender Verwendung gleich konzentrierter Färbebäder, Klotzflotten oder Druckpasten mit 1 Teil einer 59,1 % C.I. Reactive Orange 16 enthaltenden Pulvereinstellung hergestellt werden.

**Patentansprüche**

**1.** Verfahren zur Herstellung der Lithium-Azoverbindung der Formel (1)

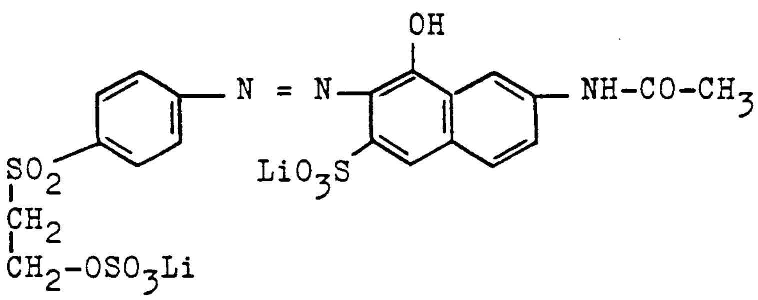

(1)

mit einem Na-Gehalt von unter 0,2 Gew.-%, insbesondere unter 0,1 Gew.-%, dadurch gekennzeichnet, daß man in wäßriger Lösung oder in einer, ein mit Wasser mischbares organisches Lösungsmittel enthaltenden wäßrigen Lösung das Lithiumsalz des 4-(β-Sulfatoethylsulfonyl)-anilins mit Nitrosylschwefelsäure diazotiert und mit dem Lithiumsalz der 1-Hydroxy-7-acetylamino-naphthalin-3-sulfonsäure bei einem pH-Wert zwischen 3 und 7 unter Verwendung einer anorganischen basischen Lithiumverbindung kuppelt.

**2.** Verfahren nach Anspruch 1, dadurch gekennzeichnet, daß man die nach Anspruch 1 erhältliche Syntheselösung eindampft, beispielsweise sprühtrocknet.

**3.** Verfahren nach Anspruch 1, dadurch gekennzeichnet, daß man die nach Anspruch 1 erhältliche Syntheselösung durch Zugabe eines Puffers in eine Flüssigpräparation mit einem pH-Wert zwischen 3 und 6,5 überführt.

**4.** Verwendung der nach einem der Ansprüche 1, 2 oder 3 erhältlichen Azoverbindung der Formel (1) als Farbstoffpulver oder als Flüssigpräparation zum Färben oder Bedrucken von carbonamid- und/oder hydroxygruppenhaltigem Material, bevorzugt Fasermaterial.

## Claims

1. A process for the preparation of the lithium azo compound of the formula (1)

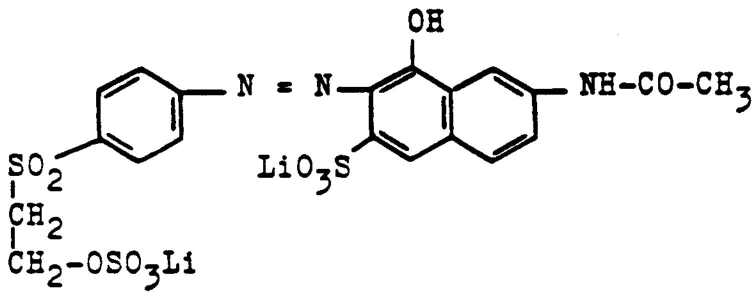

(1)

with an Na content of less than 0.2% by weight, in particular less than 0.1% by weight, which comprises diazotizing the lithium salt of 4-(β-sulfatoethylsulfonyl)-aniline in an aqueous solution or in an aqueous solution containing a water-miscible organic solvent by means of nitrosylsulfuric acid, and coupling the product with the lithium salt of 1-hydroxy-7-acetylaminonaphthalene-3-sulfonic acid at a pH of from 3 to 7 using an inorganic basic lithium compound.

2. The process as claimed in claim 1, wherein the synthesis solution obtainable as claimed in claim 1 is evaporated, for example spray-dried.

3. The process as claimed in claim 1, wherein the synthesis solution obtainable as claimed in claim 1 is converted, by adding a buffer, into a liquid preparation having a pH between 3 and 6.5.

4. The use of the azo compound of the formula (1) obtainable as claimed in one of claims 1,2 or 3 as a dye powder or as a liquid preparation for dyeing or printing material containing carboxamide and/or hydroxyl groups, preferably fiber material.

## Revendications

1. Procédé pour préparer le colorant azoïque lithique de formule (1) :

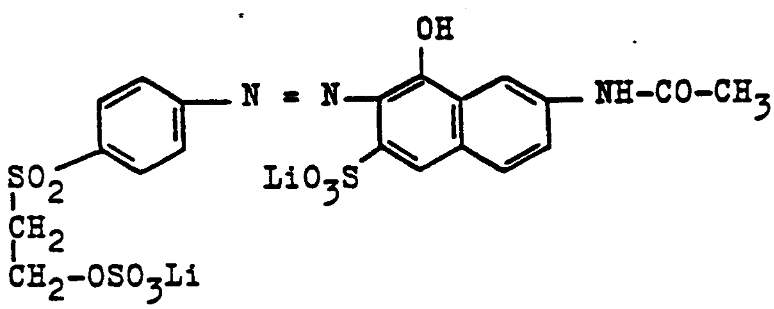

(1)

avec une teneur en sodium inférieure à 0,2% en poids, plus particulièrement inférieure à 0,1% en poids, procédé caractérisé en ce qu'on diazote dans une solution aqueuse, ou dans une solution aqueuse contenant un solvant organique miscible à l'eau, le sel de lithium de la (sulfato-2 éthylsulfonyl)-4 aniline, avec l'acide nitrosyl-sulfurique, et on copule avec le sel de lithium de l'acide hydroxy-1 acétylamino-7 naphtalène-sulfonique-3 à un pH compris entre 3 et 7, en utilisant un composé basique inorganique du lithium.

2. Procédé selon la revendication 1 caractérisé en ce que la solution de synthèse obtenue selon la revendication 1 est évaporée, par exemple est séchée par pulvérisation.

3. Procédé selon la revendication 1 caractérisé en ce que la solution de synthèse obtenue selon la revendication 1 est transformée, par addition d'un tampon, en une composition liquide ayant un pH de

3 à 6,5.

**4.** Application du composé azoïque de formule (1) qui peut être obtenu selon l'une quelconque des revendications 1 à 3, comme colorant poudre ou comme composition liquide pour la teinture ou l'impression de matières contenant des radicaux carbamoyles et/ou des radicaux hydroxy, de préférence de matières fibreuses de ce genre.